# EUROPEAN PATENT SPECIFICATION

(11) **EP 0 906 694 B1**
(45) Date of publication and mention of the grant of the patent: **06.10.2004**
(21) Application number: 97928564.0
(22) Date of filing: 27.05.1997
(51) Int. Cl.: H04N 7/08, H04N 7/16, H04N 5/272

(54) **INFORMATION AT TV-TRANSMISSION**
INFORMATION BEI FERNSEHÜBERTRAGUNG
AFFICHAGE D'INFORMATIONS LORS DE LA TRANSMISSION TELEVISUELLE

(30) Priority: 20.06.1996 SE 9602504
(43) Date of publication of application: 07.04.1999
(73) Proprietor: TELIA AB, 123 86 Farsta (SE)
(72) Inventor: MAGNUSSON, Peter, S-653 42 Karlstad (SE); BENGTSSON, Leif, S-129 42 Hägersten (SE)
(74) Representative: Akerman, Marten Lennart
(86) International application number: PCT/SE1997/000872
(87) International publication number: WO 1997/049239

(56) References cited:
- EP-A- 0 424 648
- US-A- 5 231 494
- US-A- 5 319 455

## Description

### FIELD OF THE INVENTION

The present invention relates to a method and a system for generation of digitial information, adapted for different categories of customers, at digital TV-transmission.

### PRIOR ART

A problem which advertisers experience with the advertisement displaying in connection with TV today is that an advertisement displaying on a specific channel will be received by all TV-receivers, and consequently by all TV-viewers independent of which category of population these belong to.

The aim with the present invention is to see to it that at live transmission of digital TV on a specific channel different advertising messages which are unique for different customer groups, and which have been selected for these customer groups, are generated on the basis of for instance demographical data.

To find whether the previous technology describes and possibly solves above mentioned problems, a preliminary investigation was made at which the following documents were found.
- D1:: US,A 5 231 494
- D2:: US,A 5 319 455
- D3:: EP,A2 424 648

D1 describes a device which compresses a number of TV-signals, such as a main program signal and a great number of demographically selected advertising messages. The great number of compressed TV-signals are combined to a combined signal for transmission on one single TV-channel. A TV-receiver which receives the combined signal identifies characteristics of a televised viewer, and selects a specific TV-signal out of the compressed TV-signals from the received combined signal depending on the characteristics of the viewer.

D2 describes an interactive multimedia system with distributed processing of video image information in nodes arranged in a cable TV system. The nodes can be used to distribute customer adapted advertisement to a televised viewer.

D3 describes a method and a device to transmit demographically selected TV-advertisement. A first TV-channel includes TV-programs and periodical advertisement messages. A second TV-channel includes different advertisement messages. Demographical characteristics of a televised viewer is identified, and selected advertisement messages are transmitted to said viewer depending on the demographical characteristics of the viewers.

The above mentioned found documents consequently describe the principle of the present invention, i.e. to transmit different advertisement information to different customer groups based on, for instance, the demographical characteristics of the customer groups.

However, the present invention utilizes a quite new technology in relation to the presented documents at transmission, coding and interpretation of above mentioned advertisement information.

One more aim with the present invention consequently is to implement and utilize this new technology according to the present invention in digital TV.

### SUMMARY OF THE INVENTION

The above mentioned aims are obtained by a method and a system which is indicated in the patent claim 1 respective patent claim 10.

Other characteristics of the present invention are given in the subclaims.

### BRIEF DESCRIPTION OF THE DRAWING

In the following a detailed description of an embodiment of the present invention is given with reference to the only drawing.

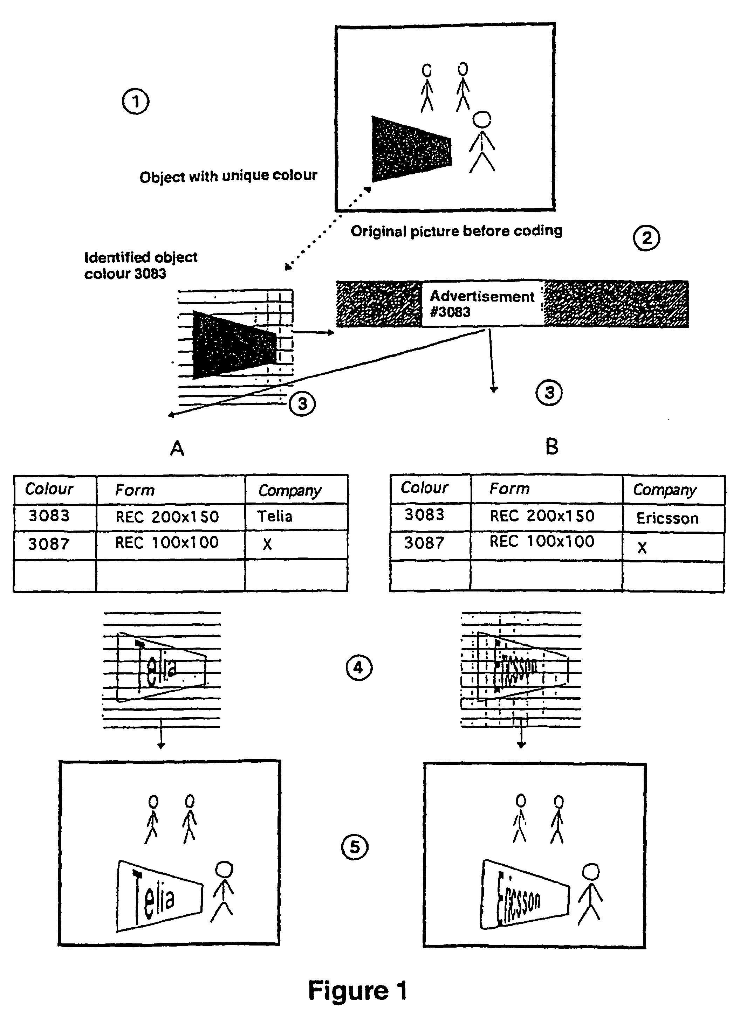

Figure 1 describes in principle the identification and coding of an advertisement object before transmission, and decoding and identification of advertisement object at a specific customer.

### DETAILED DESCRIPTION OF AN EMBODIMENT OF THE INVENTION

The present invention relates to a system where advertisement is directed to certain groups of customers. Such a system makes possible that commercial advertising is adapted to a specific TV-viewer, at which an advertiser more effectively can use his/her advertisement budget. An advertiser can for instance during a live TV-program, or at a break for advertisement, provide different advertisement information which is shown selectively for different TV-viewers, depending on to which groups of population the TV-viewers belong. Groups of population can for instance be categorized on the basis of demographical data such as age, sex, social group etc.

The present invention now will be described with reference to Figure 1. The invention makes possible, as has been mentioned above, to at live transmission of digital TV generate digital advertisement messages which are unique for different categories of customers. This will imply that the same advertisement display or corresponding picture surface in the real not coded picture material shows different advertisement messages depending on to which customer category the owner of the decoder (the set-top box) is registered. In this way one and the same advertisement place can be sold by an operator at one and the same point of time to a multiple of different advertisers. This transmitted advertisement however will not be presented to all viewers, but only to the customer categories the advertisers have paid for.

The invention consequently is applicable to digital TV-transmissions (DVE). At digital TV-transmission an extensive digital image processing (coding) is made before the transmission of the image material, which primarily aims at compressing the content as much as possible in order to reduce the bandwidth at the transmission. The invention is based on that one in connection with this coding by means of recognition of pattern identifies different predefined objects in the picture, for instance a sign with a unique colour 1. It is in this case actually the colour that is identified at the coding. When a display or corresponding picture surface has been identified at the coding, the information about which reference number the advertisement that shall be presented shall have is applied, for instance 3083, and how this advertisement shall be presented 2.

When this information is received at respective TV-viewer then a decoding is made in his/her decoder, preferably a set-up box. When the information "Advertisement 3083" is identified, the decoder makes a search in a table 3 in its storage (memory) where it searches on the identification number 3083. In the table the original form of the advertisement display or corresponding surface of the picture can be read, and depending on which customer category the TV-viewer belongs to also is stored which advertiser's advertisement that shall be shown on the display or corresponding picture surface.

It can for instance be a rectangle with the measures 200 x 150 cm where for a TV-viewer, A, Telia's "advertisement display" shall be applied. In corresponding way a TV-viewer, B, will have Ericsson's advertisement applied in the image. On the basis of the identified object in the image storage (memory) and the original form, the "advertisement display" can be transformed into the image storage 4. The viewers in this way will see different advertisement displays in their TV-receivers during the TV-transmission 5.

It should be realized that the decoder (the set-top box) arranged at the TV-receiving equipment has a very important function since this decodes the received reference number, for instance "3083" by a search in a table. In this table the decoder reads the original form of the advertisement display or corresponding picture surface and, depending on which customer category the owner of the decoder belongs to, specific advertisement or information that shall be shown on display or corresponding image surface of the TV-receiver of said decoder.

The above mentioned is only to be regarded as an advantageous embodiment of present invention, the scope of protection of the invention is only defined by what is indicated in the following patent claim.

## Claims

1. Method for the generation of different information messages which are adapted for different customer categories at digital TV-transmission,
said method comprising the steps:
a) that on digital coding of image material which is to be transmitted, a predefined object in said image material (1, 2) is identified by pattern recognition, and information as to a reference number of a message that is to be presented in the part of the image occupied by said predefined object, and how this message is to be presented (3), is added to the coded signal representing the image material;
b) that said information in the coded signal is received at the TV-receiver of a respective TV-viewer and decoded in a decoder (3) of said TV-receiver;
c) that said decoder makes a search in a memory of said decoder on the basis of the received reference number, the memory storing messages corresponding to the customer category of the viewer, and reads from said memory the message corresponding to said reference number, including the stored shape of said message;
d) that said message is transformed in an image memory (4) of said TV-receiver into an image of the same shape as said predefined object and is reproduced on the screen of the TV-receiver in place of said predefined object;
e) whereby said TV-viewers will see on their TV-receivers different messages depending on which customer category they belong to.

2. Method according to patent claim 1,
**characterized in that** said predefined object consists of an advertisement display with a unique colour, which colour is identified at said coding and is coded with a specific reference number.

3. Method according to patent claim 2,
**characterized in that** said messages consists of an advertising message.

4. Method according to patent claim 3,
**characterized in that** said TV-viewers are classified in different customer categories on the basis of demographical data.

5. Method according to any of the previous patent claims, **characterized in that** there in said decoder of each specific TV-viewer is information about the customer category (A, B) to which said customer belongs.

6. Method according to any of the patent claims 2-5,
**characterized in that**, on the basis of one for TV-viewer (A) specific advertising message and the original form of the predefined object, the advertising message can be transformed into said image storage (4) arranged in said TV-receiver.

7. Method according to any of the previous patent claims,
**characterized in that** said decoder consists of a set-top box.

8. Method according to any of the patent claims 2-7,
**characterized in that** an operator provides said decoder and defines the customer category to which a TV-viewer belongs, in cooperation with an advertising advertiser.

9. Method according to any of the patent claims 2-8,
**characterized in that** said transmitted advertisement is presented only to the customer categories which an advertiser has paid for.

10. System for the generation of different information messages which are adapted for different customer categories at digital TV-transmission, including an image coder arranged at a digital TV-transmission equipment and at least one image decoder arranged at just any TV-receiver, said image coder is arranged, on digital coding of image material which is to be transmitted, to identify a predefined object in the image material (1, 2) by pattern recognition, said image coder adds information, as to a reference number of a message that is to be presented in the part of the image occupied by said predefined object and how this message is to be presented (3), to the coded signal representing the image material,
the TV-receiver of a respective TV-viewer receives said information in the coded signal and an image decoder of said TV-receiver decodes said information,
said image decoder makes a search in a memory of said decoder on the basis of the received reference number, the memory storing messages corresponding to the customer category of the viewer, and reads from said memory the messages corresponding to said reference number including the stored shape of said message;
an image memory (4) of said TV-receiver transforms said message into an image of the same shape as said predefined object and the screen of the TV-receiver reproduces the transformed message in place of said predefined object; whereby said TV-viewers will see on their TV-receivers different messages depending on which customer category they belong to.

11. System according to patent claim 10,
**characterized in that** said image coder identifies a colouring of said predefined object, which colouring is coded with a specific reference number.

12. System according to any of the patent claims 10 or 11,
**characterized in that** said image decoder of each specific TV-viewer provides information about the customer category to which said TV-viewer belongs.

13. System according to any of the patent claims 10-12,
**characterized in that** said memory in said decoder can be updated with new advertisement messages by an operator, and that said operator defines the customer category to which a TV-viewer belongs by programming said decoder in a for different customer categories special way.

14. System according to any of the patent claims 10-13,
**characterized in that** said image decoder is a set-top box.

## Patentansprüche

1. Verfahren zum Erzeugen von unterschiedlichen Informationsmitteilungen, die verschiedenen Kundenkategorien bei der digitalen TV-Übertragung angepasst sind,
wobei das Verfahren die Schritte aufweist:
a) dass bei der digitalen Codierung eines Bildmaterials, welches übertragen werden soll, ein vorbestimmtes Objekt in dem Bildmaterial (1, 2) durch Mustererkennung identifiziert wird und Information bezüglich einer Referenznummer einer Mitteilung, die in dem Teil des Bildes, der von dem vorbestimmten Objekt eingenommen wird, präsentiert werden soll und wie diese Mitteilung zu präsentieren ist (3), dem codierten Signal, welches das Bildmaterial repräsentiert, hinzugefügt wird;
b) dass die Information in dem codierten Signal am TV-Empfänger eines entsprechenden Fernsehzuschauers empfangen wird und in einem Decoder (3) des TV-Empfängers decodiert wird;
c) dass der Decoder eine Suche in einem Speicher des Decoders auf der Basis der empfangenen Referenznummer durchführt, der Speicher Mitteilungen entsprechend der Kundenkategorie des Zuschauers speichert und aus dem Speicher die Mitteilung entsprechend der Referenznummer liest, die die gespeicherte Form der Mitteilung enthält;
d) dass die Mitteilung in einem Bildspeicher (4) in dem TV-Empfänger in ein Bild mit der gleichen Größe wie diejenige des vorbestimmten Objektes umgewandelt wird und auf dem Bildschirm des TV-Empfängers anstatt des vorbestimmten Objektes wiedergegeben wird;
e) wodurch die TV-Zuschauer auf ihren TV-Empfängern unterschiedliche Mitteilungen in Abhängigkeit von der Kundenkategorie, zu der sie gehören, sehen werden.

2. Verfahren nach Patentanspruch 1,
**dadurch gekennzeichnet, dass** das vorbestimmte Objekt aus einer Werbeanzeige mit einer einheitlichen Farbe besteht, wobei diese Farbe bei der Codierung identifiziert wird und mit einer spezifischen Referenznummer codiert ist.

3. Verfahren nach Patentanspruch 2,
**dadurch gekennzeichnet, dass** die Mitteilungen aus einer Werbemitteilung bestehen.

4. Verfahren nach Patentanspruch 3,
**dadurch gekennzeichnet, dass** die TV-Zuschauer in unterschiedlichen Kundenkategorien basierend auf demographischen Daten klassifiziert sind.

5. Verfahren nach einem der vorstehenden Patentansprüche,
**dadurch gekennzeichnet, dass** sich in dem Decoder jedes spezifischen TV-Empfängers Information über die Kundenkategorie (A, B) zu welcher dieser Kunde gehört, befindet.

6. Verfahren nach einem der Patentansprüche 2 bis 5,
**dadurch gekennzeichnet, dass** auf der Basis von einer für TV-Zuschauer (A) spezifischen Werbemitteilung und der Originalform des vorbestimmten Objektes die Werbemitteilung in den Bildspeicher 4, der in dem TV-Empfänger angeordnet ist, umgeformt werden kann.

7. Verfahren nach einem der vorstehenden Patentansprüchen,
**dadurch gekennzeichnet, dass** der Decoder aus einer Set-Top-Box besteht.

8. Verfahren nach einem der Patentansprüche 2 bis 7,
**dadurch gekennzeichnet, dass** eine Bedienungsperson in Zusammenwirkung mit einem werbenden Werbeträger den Decoder beschafft und die Kundenkategorie, zu welcher der TV-Zuschauer gehört, definiert.

9. Verfahren nach einem der Patentansprüche 2 bis 8,
**dadurch gekennzeichnet, dass** die übertragene Werbung nur denjenigen Kundenkategorien präsentiert wird, für die ein Werbeträger bezahlt hat.

10. System zum Erzeugen von unterschiedlichen Informationsmitteilungen, die an unterschiedliche Kundenkategorien angepasst worden sind, bei der digitalen TV-Übertragung,
mit einem Bildcodierer, der an der digitalen TV-Übertragungsausrüstung angeordnet ist, und wenigstens einem Bilddecoder, der direkt an jedem TV-Empfänger angeordnet ist,
wobei der Bildcodierer bei der digitalen Codierung von zu übertragendem Bildmaterial angeordnet ist, um ein vorbestimmtes Objekt in dem Bildmaterial (1, 2) mittels Mustererkennung zu identifizieren, der Bildcodierer dem codierten Signal, welches das Bildmaterial repräsentiert, Information hinzufügt, wie beispielsweise die Referenznummer einer Mitteilung, die in dem Teil des Bildes, der von dem vorbestimmten Objekt besetzt ist, präsentiert werden soll und wie diese Mitteilung zu repräsentieren ist (3),
wobei der TV-Empfänger eines entsprechenden TV-Zuschauers die Information in dem codierten Signal empfängt und ein Bilddecoder dieses TV-Empfängers diese Information decodiert,
der Bilddecoder eine Suche in einem Speicher des Decoders, auf der Basis der empfangenen Referenznummer durchführt, wobei der Speicher Mitteilungen entsprechend der Kundenkategorie des Zuschauers speichert, und aus diesem Speicher die Mitteilungen entsprechend der Referenznummer einschließlich der gespeicherten Form dieser Mitteilung liest;
wobei ein Bildspeicher (4) dieses TV-Empfängers diese Mitteilung in ein Bild mit der gleichen Form wie diejenige des vorbestimmten Objektes transformiert und der Bildschirm des TV-Empfängers die transformierte Mitteilung anstatt des vorbestimmten Objektes wiedergibt;
wodurch die TV-Zuschauer auf ihren TV-Empfängern in Abhängigkeit davon, zu welcher Kundenkategorie sie gehören, unterschiedliche Mitteilungen sehen.

11. System nach Patentanspruch 10,
**dadurch gekennzeichnet, dass** der Bildcodierer eine Farbe des vorbestimmten Objektes identifiziert, wobei diese Farbe mit einer spezifischen Referenznummer codiert ist.

12. System nach einem der Patentansprüche 10 oder 11,
**dadurch gekennzeichnet, dass** der Bilddecoder jedes spezifischen TV-Zuschauers Information über die Kundenkategorie, zu der dieser TV-Zuschauer gehört, erzeugt.

13. System nach einem der Patentansprüche 10 bis 12,
**dadurch gekennzeichnet, dass** der Speicher in dem Decoder mit neuen Werbemitteilungen mittels einer Bedienungsperson aktualisiert werden kann, und dass die Bedienungsperson die Kundenkategorie, zu welcher der TV-Zuschauer gehört, durch Programmierung des Dekoders in einer für unterschiedliche Kundenkategorien speziellen Art und Weise definiert.

14. System nach einem der Patentansprüche 10 bis 13,
**dadurch gekennzeichnet, dass** der Bilddecoder eine Set-Top-Box ist.

## Revendications

1. Procédé destiné à générer différents messages d'information qui sont adaptés à différentes catégories de consommateurs lors de la transmission de télévision numérique,
ledit procédé comprenant les étapes :
a) que, lors du codage numérique du contenu de l'image qui doit être transmis, un objet prédéfini dans ledit contenu de l'image (1, 2) est identifié par reconnaissance de motif, et que des informations, telles qu'un numéro de référence d'un message qui doit être présenté dans la partie de l'image occupée par ledit objet prédéfini et la façon dont le message doit être présenté (3), sont ajoutées au signal codé représentant le contenu de l'image ;
b) que lesdites informations dans le signal codé sont reçues par le récepteur de télévision d'un téléspectateur correspondant et décodées dans un décodeur (3) dudit récepteur de télévision ;
c) que ledit décodeur fait une recherche dans une mémoire dudit décodeur sur la base du numéro de référence reçu, la mémoire stockant des messages correspondant à la catégorie de consommateur du téléspectateur, et lit dans ladite mémoire le message correspondant au dit numéro de référence, y compris la forme stockée dudit message ;
d) que ledit message est transformé dans une mémoire d'image (4) dudit récepteur de télévision en une image de la même forme que ledit objet prédéfini et est reproduit sur l'écran du récepteur de télévision à la place dudit objet prédéfini ;
e) dans lequel lesdits téléspectateurs verront sur leur récepteur de télévision différents messages dépendant de la catégorie de consommateur à laquelle ils appartiennent.

2. Procédé selon la revendication 1, **caractérisé en ce que** ledit objet prédéfini est constitué par un affichage d'annonce publicitaire ayant une seule couleur, laquelle couleur est identifiée au dit codage et est codée avec un numéro de référence spécifique.

3. Procédé selon la revendication 2, **caractérisé en ce que** ledit message est constitué par un message publicitaire.

4. Procédé selon la revendication 3, **caractérisé en ce que** lesdits téléspectateurs sont classés en différentes catégories de consommateurs sur la base de données démographiques.

5. Procédé selon l'une quelconque des revendications précédentes, **caractérisé en ce qu'**il y a dans ledit décodeur de chaque téléspectateur spécifique des informations au sujet de la catégorie de consommateur (A, B) à laquelle appartient ledit consommateur.

6. Procédé selon l'une quelconque des revendications 2 à 5, **caractérisé en ce que**, sur la base d'un message publicitaire spécifique pour un téléspectateur (A) et de la forme originale de l'objet prédéfini, le message publicitaire peut être transformé dans ledit stockage d'image (4) disposé dans ledit récepteur de télévision.

7. Procédé selon l'une quelconque des revendications précédentes, **caractérisé en ce que** ledit décodeur est constitué par un set-top box.

8. Procédé selon l'une quelconque des revendications 2 à 7, **caractérisé en ce qu'**un opérateur fournit ledit décodeur et définit la catégorie de consommateur à laquelle appartient un téléspectateur, en coopération avec un annonceur de publicité.

9. Procédé selon l'une quelconque des revendications 2 à 8, **caractérisé en ce que** lesdites annonces publicitaires transmises ne sont présentées qu'aux catégories de consommateurs pour lesquelles un annonceur a payé.

10. Système destiné à générer différents messages d'information qui sont adaptés à différentes catégories de consommateurs lors de la transmission de télévision numérique,
comprenant un codeur d'image disposé dans l'équipement de transmission de télévision numérique et au moins un décodeur d'image adapté à n'importe quel récepteur de télévision, ledit codeur d'image est adapté, lors du codage numérique du contenu de l'image qui doit être transmis, afin d'identifier un objet prédéfini dans le contenu de l'image (1, 2) par reconnaissance de motif, ledit codeur d'image ajoute des informations, telles que le numéro de référence d'un message qui doit être présenté dans la partie de l'image occupée par ledit objet prédéfini et la façon dont ce message doit être présenté (3), au signal codé représentant le contenu de l'image,
le récepteur de télévision d'un téléspectateur correspondant reçoit lesdites informations dans le signal codé et un décodeur d'image dudit récepteur de télévision décode lesdites informations,
ledit décodeur d'image fait une recherche dans une mémoire dudit décodeur sur la base du numéro de référence reçu, la mémoire stockant des messages correspondant à la catégorie de consommateur du téléspectateur, et lit dans ladite mémoire les messages correspondant au dit numéro de référence comprenant la forme stockée dudit message ;
une mémoire d'image (4) dudit récepteur de télévision transforme ledit message en une image de la même forme que ledit objet prédéfini et l'écran du récepteur de télévision reproduit le message transformé à la place dudit objet prédéfini ;
dans lequel lesdits téléspectateurs verront sur leur récepteur de télévision différents messages dépendant de la catégorie de consommateur à laquelle ils appartiennent.

11. Système selon la revendication 10, **caractérisé en ce que** ledit codeur d'image identifie un coloris dudit objet prédéfini, lequel coloris est codé avec un numéro de référence spécifique.

12. Système selon l'une quelconque des revendications 10 ou 11, **caractérisé en ce que** ledit décodeur d'image de chaque téléspectateur spécifique fournit des informations sur la catégorie de consommateur à laquelle appartient ledit téléspectateur.

13. Système selon l'une quelconque des revendications 10 à 12, **caractérisé en ce que** ladite mémoire dans ledit décodeur peut être mise à jour par un opérateur avec de nouveaux messages d'annonce publicitaire, et que ledit opérateur définit la catégorie de consommateur à laquelle appartient un téléspectateur en programmant ledit décodeur d'une manière spécifique pour les différentes catégories de consommateurs.

14. Système selon l'une quelconque des revendications 10 à 13, **caractérisé en ce que** ledit décodeur d'image est un set-top box.
